(19) Europäisches Patentamt
European Patent Office
Office européen des brevets

(11) **EP 3 268 437 B1**

(12) **EUROPÄISCHE PATENTSCHRIFT**

(45) Veröffentlichungstag und Bekanntmachung des Hinweises auf die Patenterteilung:
**13.01.2021 Patentblatt 2021/02**

(51) Int Cl.:
*C09C 1/36* (2006.01)          *C09C 1/40* (2006.01)
*C09C 1/00* (2006.01)          *C09D 5/02* (2006.01)
*C09C 3/06* (2006.01)          *C08K 9/02* (2006.01)

(21) Anmeldenummer: **16708081.1**

(22) Anmeldetag: **02.03.2016**

(86) Internationale Anmeldenummer:
**PCT/EP2016/000364**

(87) Internationale Veröffentlichungsnummer:
**WO 2016/142042 (15.09.2016 Gazette 2016/37)**

(54) **ALUMINIUMHYDROXID-HALTIGE KOMPOSITPIGMENTE UND VERFAHREN ZU IHRER HERSTELLUNG**

COMPOSITE PIGMENTS CONTAINING ALUMINIUM HYDROXIDE AND METHOD FOR THEIR PREPARATION

PIGMENTS COMPOSITES CONTENANT DE L'HYDROXYDE D'ALUMINIUM ET LEUR PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2015   DE 102015002946**
**17.04.2015   EP 15001123**

(43) Veröffentlichungstag der Anmeldung:
**17.01.2018   Patentblatt 2018/03**

(73) Patentinhaber: **Kronos International, Inc.**
**51373 Leverkusen (DE)**

(72) Erfinder:
• **WILKENHOENER, Uwe**
**42113 Wuppertal (DE)**
• **MERSCH, Frank**
**42799 Leichlingen (DE)**

(56) Entgegenhaltungen:
EP-A1- 1 329 485          WO-A1-2014/078039
DE-A1-102007 040 641     US-A1- 2014 079 745

• GAC Chemical Corporation34 Kidder Point RoadSearsport, Maine 04974U.S.A.: "SODIUM ALUMINATE SOLUTION Safety Data Sheet", , Februar 2015 (2015-02), Seiten 1-7, XP002758138, Gefunden im Internet: URL:http://www.gacchemical.com/image_uploa d/SDS%20Document%20for%20Sodium%20Alu minat e%20Solution.pdf [gefunden am 2016-05-27]
• ClearTech Industries Inc., 2302 Hanselman Avenue, Saskatoon, SK, S7L 5Z3: "MATERIAL SAFETY DATA SHEET Sodium Aluminate", , 15. März 2006 (2006-03-15), Seiten 1-7, XP002758139, Gefunden im Internet: URL:http://www.cleartech.ca/msds/salu-03-1 5-2006.pdf [gefunden am 2016-05-27]

**Beschreibung**

Gebiet der Erfindung

Die Erfindung betrifft die Herstellung von Aluminiumhydroxid-haltigen Kompositpigmenten, und ihre Verwendung zur Verbesserung der Pigment-Lichtstreueffizenz in Beschichtungen, Kunststoffen, Papier und Laminat.

Technologischer Hintergrund der Erfindung

Anorganische Pigmente und insbesondere Titandioxidpigmente werden oft in verschiedene Matrices als Weißmacher, Tönungsmittel oder Trübungsmittel eingearbeitet. Titandioxid streut aufgrund seiner hohen Brechkraft Licht besonders effizient und ist deswegen das wichtigste Weißpigment in den Anwendungsbereichen Farben und Lacke, Kunststoffe, Papier und Fasern. Die Lichtstreueffizienz sinkt, wenn die Titandioxidpartikel in einem geringeren Abstand als etwa der halben Wellenlänge des Licht, also etwa 0,20 bis 0,25 $\mu$m voneinander entfernt in der Matrix verteilt sind. Die Lichtstreueffizienz wird typischerweise mit Hilfe des Deckvermögens bzw. des Aufhellvermögens (tinting strength) des Titandioxidpigments in der Matrix gemessen.

Titandioxid ist auf der anderen Seite ein signifikanter Kostenfaktor, und es wird seit längerem nach Möglichkeiten gesucht, um die Einsatzmenge an Titandioxid zu verringern, ohne signifikante Einbußen im Deckvermögen hinnehmen zu müssen. Eine Einsparung ist möglich durch die Kombination von Titandioxidpartikeln mit geeigneten Füllstoffen, die als sogenannte "Extender-Partikel" als Abstandshalter für die $TiO_2$-Partikel wirken sollen. Die bekannten Verfahren umfassen sowohl die einfache Mischung der Komponenten als auch die Verbindung der $TiO_2$-Partikel mit den Extender-Partikeln mittels eines ausgefällten Bindemittels oder die in situ-Ausfällung des Extenders auf der Oberfläche der Titandioxidpartikel. Desweiteren sind Verfahren bekannt, um die feinen Titandioxidpartikel auf gröberen Füllstoffpartikeln zu verteilen.

Aus dem umfangreich vorliegenden Stand der Technik werden im Folgenden nur ausgewählte Schriften zitiert.

WO 1999/035193 A1 beschreibt beispielsweise die Herstellung einer Pigmentmischung aus Titandioxid und einem anorganischen Extender ("Spacer") wie $SiO_2$ oder $CaCO_3$ zur Verwendung bei der Papierherstellung.

DE 10 057 294 C5 offenbart ein Pigmentgemisch aus Titandioxid und Talkum zum Einsatz in Dekorrohpapier.

EP 0 861 299 B1 offenbart ein Titandioxidpigment, welches mit anorganischen Nanopartikeln, beispielsweise kolloidaler Kieselsäure, sowie einer Schicht aus anorganischen Oxiden wie Aluminium-, Silicium- oder Zirkonoxid beschichtet ist, wobei die anorganische Oxidschicht entweder zwischen Titandioxidoberfläche und Nanopartikeln angeordnet ist oder die äußere Deckbeschichtung bildet. Bei den anorganischen Nanopartikeln handelt es sich um $SiO_2$, $Al_2O_3$ oder $CaCO_3$.

DE 10 2006 012 564 A1 offenbart Titandioxidpigmentpartikel, auf deren Oberfläche sich Mikrohohlkugeln sowie eine Aluminiumoxid-Aluminiumphosphat-Beschichtung befinden.

In dem Verfahren gemäß EP 0 956 316 B1 werden Pigmentteilchen und gefälltes Calciumcarbonat (PCC) in wässriger Phase miteinander vermischt, so dass ein Kompositpigment entsteht, bei dem die Carbonatteilchen mit einer Teilchengröße von 30 bis 100 nm an die Oberfläche der Pigmentteilchen angeheftet sind. Das Kompositpigment enthält 30 bis 90 Gew.-% gefälltes Calciumcarbonat.

DE 1 792 118 A1 offenbart die in situ-Ausfällung von Calciumcarbonat in einer Titandioxidpigmentsuspension durch Vermischen einer Calciumchlorid- und einer Natriumcarbonatlösung, wobei eine dieser Lösungen Titandioxidpigment enthält. Es entstehen Calciumcarbonat-Titandioxid-Kompositpartikel.

WO 2000/001771 A1 offenbart ein Kompositpigment, das anorganische Partikel einer Partikelgröße von etwa 1 bis 10 $\mu$m enthält und an deren Oberfläche in Folge entgegengesetzter Oberflächenladung Titandioxidpigmentpartikel geheftet sind. Die Herstellung erfolgt in einer wässrigen Phase. Die anorganischen Partikel sind ausgewählt aus gängigen Füllstoffen wie z.B. Kaolin, Ton, Talkum, Glimmer oder Carbonate.

Die Patentanmeldung WO 2014/000874 A1 offenbart ein Kompositpigment, das Titandioxid und ein partikuläres Material als Extender enthält sowie Calciumcarbonat, das im Herstellungsprozess gefällt wird. Die Kompositpartikel werden in einem kombinierten Prozess aus Dispergierung und Fällung hergestellt. Das Kompositpigment ist geeignet zur Verwendung in Beschichtungen, Kunststoff und Laminat.

Die Patentanmeldung EP 1 3005 813.4 (angemeldet 13.12.2013) offenbart ein Kompositpigment, das anorganische Pigmentpartikel, insbesondere Titandioxid, und gefälltes partikuläres Calciumphosphat enthält. Das Kompositpigment ist geeignet zur Verwendung in Beschichtungen, Kunststoffen und insbesondere in Papier und Laminat.

Die Patentschriften US20140079745 A1, WO2014078039 A1, DE102007040641 A1 und EP1329485 A1 offenbaren weitere, alternative Kompositpigmente.

## Aufgabenstellung und Kurzbeschreibung der Erfindung

Der Erfindung liegt die Aufgabe zugrunde, ein Verfahren zur Herstellung eines alternativen Kompositpigments bereitzustellen.

Die Aufgabe wird gelöst durch ein Verfahren zur Herstellung von Aluminiumhydroxid-haltigen Kompositpigmentpartikeln, die einen Aluminiumhydroxidanteil von mindestens 20 Gew.-% bevorzugt mindestens 40 Gew.-% aufweisen, wobei

eine wässrige alkalische Lösung von Natriumaluminat mit einem pH-Wert von mindestens 12 bereitgestellt wird, anschließend anorganische Pigmentpartikel zugegeben werden und der pH-Wert der Lösung in den Bereich <8 und >3 abgesenkt wird, so dass partikuläres Aluminiumhydroxid gefällt wird und sich Aluminiumhydroxid-haltige Kompositpigmentpartikel bilden, und die Kompositpartikel abschließend abgetrennt werden.

Weitere vorteilhafte Ausformungen der Erfindung sind in den Unteransprüchen angegeben.

## Figuren

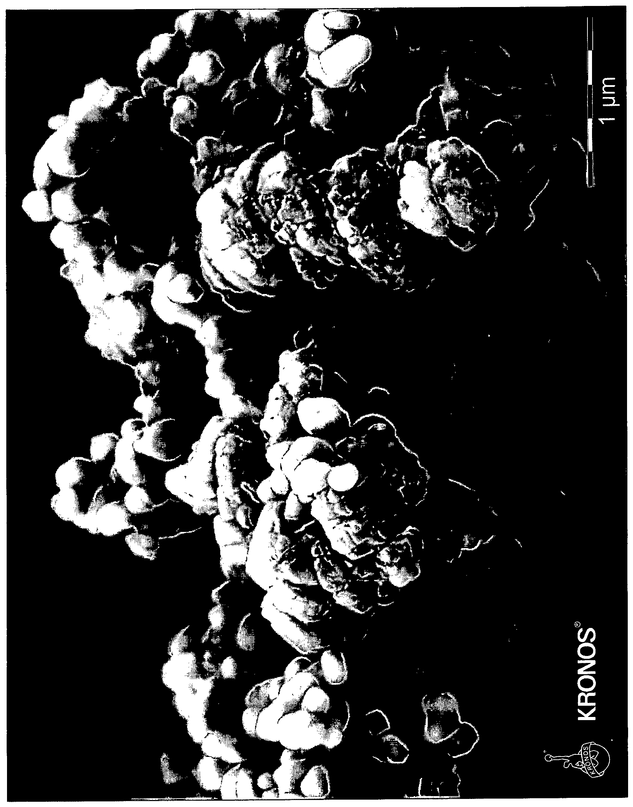

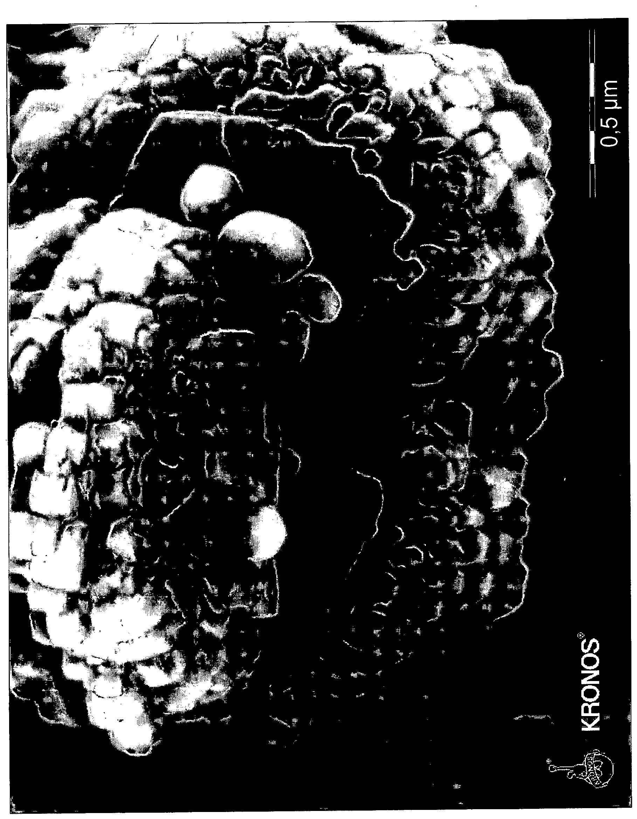

Figur 1 und 2: Rasterelektronenmikroskopaufnahmen von Kompositpigmentpartikeln gemäß Beispiel 1.

## Beschreibung der Erfindung

Alle im Folgenden offenbarten Angaben bezüglich Größe in $\mu$m usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Die erfindungsgemäßen Kompositpigmentpartikel enthalten anorganische Pigmentpartikel, und in situ gefälltes Aluminiumhydroxid. Unter Aluminiumhydroxid werden im folgenden Aluminiumorthohydroxid (z.B. Gibbsit, Bayerit, Nordstrandit, Hydrargillit) und Aluminiummetahydroxid (z.B. Böhmit, Diaspor) verstanden. Die gefällten Aluminiumhydroxidpartikel bilden diskrete Partikel bzw. Partikelagglomerate und wirken als Träger für die Pigmentpartikel oder als Abstandshalter (Extender). Die erfindungsgemäßen Kompositpartikel zeichnen sich weiterhin dadurch aus, dass zwischen Träger- bzw. Extenderpartikel und Pigmentpartikel ein starker Verbund existiert, der in der weiteren üblichen Verarbeitung beim Anwender wie z.B. bei der Dispergierung in einem Dissolver oder in einem Inline-Dispergierer nur schwer getrennt werden kann. Damit unterscheidet sich das erfindungsgemäße Kompositpigment von bekannten Pigment-Extender-Mischungen.

Unter anorganischen Pigmentpartikeln werden im Rahmen der Erfindung Partikel im Größenbereich von etwa 100 nm bis etwa 1 $\mu$m verstanden. Als Pigment kommen grundsätzlich anorganische Pigmente wie Titandioxid, Eisenoxid, Zinkoxid, Zinksulfid, Chrompigmente und Sulfide in Betracht.

Insbesondere ist Titandioxid geeignet. Grundsätzlich können oberflächenbehandelte oder unbehandelte Titandioxidpigmentpartikel verwendet werden. Bevorzugt werden unbehandelte Titandioxidgrundkörper-Partikel verwendet, insbesondere Titandioxidgrundkörper-Partikel aus dem Chloridprozess. Die Titandioxidpigmentpartikel können dotiert sein, vorzugsweise mit Aluminium. Wirtschaftlich besonders vorteilhaft ist es, nach dem Chloridprozess hergestellte, nicht-sandgemahlene und nicht-entchlorte Titandioxidgrundkörper-Partikel einzusetzen. Alternativ ist es auch möglich, sandgemahlene und entchlorte Titandioxidgrundkörper-Partikel aus dem Chloridprozess oder sandgemahlene Titandioxidgrundkörper-Partikel aus dem Sulfatprozess einzusetzen.

Die Aluminiumhydroxidpartikel sind bevorzugt überwiegend kristallin, insbesondere kristallin. In einer besonderen Ausführung weisen sie eine Partikelgröße von mindestens 0,05 $\mu$m, bevorzugt mindestens 0,5 $\mu$m und insbesondere mindestens 1,0 $\mu$m auf. Die Partikel sind sowohl Primärpartikel als auch Partikelagglomerate.

Die erfindungsgemäßen Kompositpartikel enthalten mindestens 20 Gew.-%, insbesondere mindestens 40 Gew.-% Aluminiumhydroxid. Der Pigmentgehalt der Kompositpartikel beträgt vorzugsweise 20 bis 80 Gew.-%.

In einer besonderen Ausführung der Erfindung enthält das Kompositpigment zusätzlich mindestens einen weiteren anorganischen und/oder mindestens einen organischen Füllstoff. Der anorganische Füllstoff kann ausgewählt sein aus der Gruppe natürliche und synthetische Silikate (z.B. Talkum, Kaolin, Glimmer, Mullit, Quarz, Kieselgele, gefällte Kieselsäure, pyrogene Kieselsäure, Silicumdioxid, oberflächenbehandeltes Siliciumdioxid), Carbonate (z.B. natürliches oder gefälltes Calcium- oder Magnesiumcarbonat, Dolomit), Sulfate (z.B. natürliches oder gefälltes Calcium- und Bariumsulfat), Oxide/Hydroxide (z.B. Aluminiumoxid, Aluminiumhydroxid, Magnesiumoxid), natürliche Gesteine wie Basalt- und Bimsmehl, Perlite sowie weitere dem Fachmann bekannten Füllstoffe (z.B. Wollastonit, Feldspate, Glimmer, faserartige Füllstoffe, Glasmehl, etc.). Besonders bevorzugt sind Dolomit, Huntit, Magnesit und Hydromagnesit.

Der weitere Füllstoff weist bevorzugt eine Partikelgröße von etwa 0,1 bis 30 $\mu$m, insbesondere von etwa 1 bis 10 $\mu$m auf. Der weitere Füllstoff kann in einer Menge von 10 bis 60 Gew.-%, bevorzugt 20 bis 50 Gew.-% enthalten sein.

Die erfindungsgemäßen Kompositpigmentpartikel enthalten das Pigment in ideal dispergierter Form und führen damit im Anwendersystem zu einer Steigerung der Effizienz der Lichtstreuung des anorganischen Pigments, insbesondere von Titandioxidpigment. Auf diese Weise kann der Teil des Pigments, der üblicherweise im Anwendersystem nicht ideal dispergiert, sondern "geflockt" vorliegt, eingespart werden. Die Kompositpigmentpartikel führen im Anwendersystem bei gleicher Pigmentmenge zu verbessertem Deckvermögen, bzw. erlauben im Anwendersystem eine Reduktion des Pigmentgehalts bei gleichbleibendem Deckvermögen.

Die erfindungsgemäßen Kompositpigmentpartikel werden durch in situ-Fällung von Aluminiumhydroxid in einer wässrigen Pigmentpartikelsuspension hergestellt.

Das erfindungsgemäße Verfahren zur Herstellung von Aluminiumhydroxid-haltigen Kompositpigmentpartikeln, die einen Aluminiumhydroxidanteil von mindestens 20 Gew.-% bevorzugt mindestens 40 Gew.-% aufweisen, geht von einer alkalischen Natriumaluminatlösung mit einem pH-Wert von mindestens 12 aus. Die gegebenenfalls erforderliche Einstellung des pH-Werts erfolgt bevorzugt mit Natronlauge.

In einer besonderen Ausführung der Erfindung handelt es sich bei der Natriumaluminatlösung um einen industriellen Reststoff, beispielsweise aus der aluminiumverarbeitenden Industrie. Natriumaluminatlösungen aus der aluminiumverarbeitenden Industrie weisen üblicherweise eine Konzentration von etwa 200g/L auf. Sofern dieser Reststoff färbende Verunreinigungen enthält und angestrebt wird, rein weißes Aluminiumhydroxid zu fällen, ist es vorteilhaft, die färbenden Verunreinigungen durch eine Vorfällung weitgehend zu entfernen. Die Vorfällung wird durch Absenken des pH-Werts eingeleitet. Erfahrungsgemäß fällt bei Raumtemperatur (bis etwa 30°C) und einem pH-Wert von etwa 12 ein geringer Teil der gelösten Stoffe aus. Das Löslichkeitsprodukt ist sowohl vom pH-Wert als auch von der Temperatur und dem Druck abhängig. Für Fällungen bei anderen Temperaturen verschiebt sich der pH-Wert entsprechend. Bevorzugt wird der pH-Wert durch Zugabe von Salzsäure oder einer sauren Aluminiumverbindung (z.B. Aluminiumsulfat) gesenkt. Nach einer Verweilzeit von etwa 1 bis 8 Stunden bildet sich ein leicht gefärbter Niederschlag und eine klare ungefärbte überstehende Lösung (Natriumaluminat). Erfindungsgemäß wird anschließend der Aluminiumgehalt der Lösung auf etwa 250 g/L bis 400 g/L eingestellt, beispielsweise durch Zugabe einer entsprechenden Menge Natriumaluminats.

Erfindungsgemäß werden anschließend die anorganischen Pigmentpartikel in die Natriumaluminatlösung gegeben. Unter anorganischen Pigmentpartikeln werden im Rahmen der Erfindung Partikel im Größenbereich von etwa 100 nm bis etwa 1 μm verstanden. Als Pigment kommen grundsätzlich anorganische Pigmente wie Titandioxid, Eisenoxid, Zinkoxid, Zinksulfid, Chrompigmente und Sulfide in Betracht. Insbesondere ist Titandioxid geeignet. Die Titandioxidpigmentpartikel können oberflächenbehandelt oder unbehandelt sein, beispielsweise kann es sich um Titandioxidgrundkörper aus dem Sulfatprozess oder dem Chloridprozess handeln. Insbesondere sind nach dem Chloridprozess hergestellte, gemahlene oder ungemahlene Titandioxidgrundkörper-Partikel geeignet. Ebenso geeignet sind sandgemahlene Titandioxidgrundkörper-Partikel aus dem Sulfatprozess.

Anschließen wird der pH-Wert der Lösung in den Bereich <8 und >3, bevorzugt auf einen pH-Wert von 6 bis <8 abgesenkt und das Aluminiumhydroxid gefällt. Die Fällung kann durch Zugabe einer sauren Komponente wie einer Säure (z.B. Salzsäure) oder durch Zugabe eines sauer reagierenden Salzes (z.B. Aluminiumsulfat) eingeleitet werden. In einer besonderen Ausführung des Verfahrens können saure nicht-entchlorte Titandioxidgrundkörper-Partikel eingesetzt werden.

In einer besonderen Ausrührung des Verfahrens werden zusätzlich Aluminiumhydroxid-Keime eingesetzt, insbesondere in einer Menge von 0,1 bis 1,0 Gew.-%.

Die Fällungsreaktion kann in einem statischen oder dynamischen Mischer oder in einem Rührkessel bzw. gut gerührtem Reaktor üblicher Bauarten durchgeführt werden.

Das gefällte Aluminiumhydroxid ist partikelförmig und bevorzugt überwiegend kristallin, insbesondere kristallin. Die Partikel sind sowohl Primärpartikel wie Partikelagglomerate. Dem Fachmann ist bekannt, dass die Partikelgröße des gefällten Aluminiumhydrats durch Variation der Fällungsbedingungen wie Temperatur, pH-Wert-Verlauf, Zugabegeschwindigkeit und über die Zugabe fällungsaktiver Substanzen wie z.B. Kristallkeime, Magnesiumionen oder organische Substanzen gesteuert werden kann. In einer besonderen Ausführung weisen die Partikel eine Partikelgröße von mindestens 0,05 μm, bevorzugt mindestens 0,5 μm und insbesondere mindestens 1,0 μm auf.

In einer bevorzugten Ausführung der Erfindung schließt sich der pH-Wert-Absenkung eine Reifezeit an, die entsprechende Ruhezeiten, die bei der üblichen Beschichtung von (Titandioxid-)Pigmentpartikeln eingehalten werden (z.B. 30 Minuten), überschreitet. Erfindungsgemäß beträgt die Reifezeit vorzugsweise mindestens 1 Stunde, bevorzugt mindestens 2 Stunden. Die Reifezeit ermöglicht die Ausbildung der kristallinen Struktur der Aluminiumhydroxid-Partikel.

Die Mengen werden so abgestimmt, dass die gebildeten Kompositpigmentpartikel mindestens 20 Gew.-%, insbesondere mindestens 40 Gew.-% Aluminiumhydroxid enthalten. Der $TiO_2$-Gehalt der Kompositpigmentpartikel beträgt vorzugsweise 20 bis 80 Gew.-%.

In einer besonderen Ausführung der Erfindung wird der Suspension mindestens ein weiterer anorganischer und/oder mindestens ein organischer Füllstoff zugegeben. Der anorganische Füllstoff kann ausgewählt sein aus der Gruppe natürliche und synthetische Silikate (z.B. Talkum, Kaolin, Glimmer, Mullit, Quarz, Kieselgele, gefällte Kieselsäure, pyrogene Kieselsäure, Siliumdioxid, oberflächenbehandeltes Siliciumdioxid), Carbonate (z.B. natürliches oder gefälltes Calcium- oder Magnesiumcarbonat, Dolomit), Sulfate (z.B. natürliches oder gefälltes Calcium- und Bariumsulfat), Oxide/Hydroxide (z.B. Aluminiumoxid, Aluminiumhydroxid, Magnesiumoxid), natürliche Gesteine wie Basalt und Bimsmehl, Perlite sowie weitere dem Fachmann bekannten Füllstoffe (z.B. Wollastonit, Feldspate, Glimmer, faserartige Füllstoffe, Glasmehl, etc.). Besonders bevorzugt sind Dolomit, Huntit, Magnesit und Hydromagnesit.

Der weitere Füllstoff weist bevorzugt eine Partikelgröße von etwa 0,1 bis 30 $\mu m$, insbesondere von etwa 1 bis 10 $\mu m$ auf. Der weitere Füllstoff kann in einer Menge von 10 bis 60 Gew.-%, bevorzugt 20 bis 50 Gew.-% bezogen auf Kompositpigmentpartikel zugegeben werden.

Abschließend werden die Kompositpigmentpartikel aus der Suspension abgetrennt, gewaschen und getrocknet.

Je nach gewünschter Qualität des mit den Kompositpigmentpartikeln hergestellten Produkts (Beschichtung, Kunststoff, Laminat, etc.) kann die Effektivität des Pigments, insbesondere des Titandioxids optimiert werden. Durch Einsparung von Pigment, erreicht durch die effektivere Nutzung im Kompositpigmentpartikel, ergibt sich ein wirtschaftlicher Vorteil im Vergleich zum getrennten Einsatz von Extender und Pigment. Die Verwendung der erfindungsgemäß hergestellten Kompositpigmentpartikel im Anwendersystem ermöglicht eine Pigmenteinsparung von bis zu 30%, bevorzugt 15 bis 30% bei sonst gleichen optischen Eigenschaften.

Insbesondere kann das Kompositpigment als teilweiser oder 100 %iger Ersatz für das reine Pigment (z.B. Titandioxid) eingesetzt werden.

Ein weiterer Vorteil liegt darin, dass das $TiO_2$ auf dem Kompositpigmentpartikel bereits gut verteilt vorliegt und somit Energie für die Dispergierung beispielsweise in einem Lacksystem eingespart werden kann. Die im Vergleich zum reinen Pigment gröberen Kompositpigmentpartikel benötigen weniger Dispergier- und Mahlenergie und geringere Mengen an Dispergiermitteln. Hierdurch ergibt sich für den Lackhersteller ein weiterer Vorteil.

In einer weiteren Ausführung des erfindungsgemäßen Verfahrens können die erfindungsgemäßen Kompositpigmentpartikel mit anorganischen Verbindungen wie beispielsweise $SiO_2$, $Al_2O_3$ oder Phosphat behandelt werden, wie sie bei der Titandioxidpigmentherstellung üblicherweise eingesetzt werden. Dem Fachmann sind die entsprechenden Verbindungen und Verfahrensweisen bekannt.

In einer besonderen Ausführung des erfindungsgemäßen Verfahrens können zusätzlich organische Additive zugegeben werden, vorzugsweise in einer Menge von 0,05 bis 30 Gew.-% bevorzugt 0,5 bis 10 Gew.-% bezogen auf Pigment-Extendermischung. Die organischen Additive können sowohl in fester als auch in flüssiger Form zugegeben werden. Geeignet als organische Additive sind zum einen handelsübliche wachsartige Additive mit oder ohne weitere chemische Funktionalisierung. Zum anderen sind bekannte Dispergieradditive oder andere in der Lacktechnologie übliche Hilfsstoffe beispielsweise für Rheologie, Entschäumung, Benetzung etc. geeignet.

Die erfindungsgemäßen Kompositpigmentpartikel sind geeignet für die Verwendung in Beschichtungen, Kunststoffen, Papier und Laminaten.

Beispiele

Die Erfindung wird anhand der folgenden Beispiele genauer beschrieben, ohne dass dadurch der Umfang der Erfindung eingeschränkt werden soll.

Beispiel 1

In eine wässrige Suspension von 250 g unbehandelten Titandioxidpigmentpartikeln (Grundkörper) in 500 mL Wasser mit einem pH-Wert von ca. 10 wurde unter intensivem Rühren 250 g $Al_2O_3$ in Form einer wässrigen Natriumaluminatlösung (Konzentration 295 g/L) gegeben. Dabei stieg der pH-Wert auf 12 bis 13. Anschließend wurde durch pH-Wert-Absenkung die Aluminiumhydroxid-Fällung durchgeführt, indem über einen Zeitraum von 8 Stunden schrittweise 25%ige HCl zugegeben wurde. Am Ende war ein pH-Wert von 6 bis 8 erreicht. Es folgte eine Reifung über mehrere Stunden. Anschließend wurde der Feststoff auf einer Nutsche mit entsalztem Wasser gewaschen, abgetrennt und im Laborofen 16 Stunden bei 105°C getrocknet.

Die hergestellten Kompositpartikel enthielten 50 Gew.-% Titandioxid und 50 Gew.-% Aluminiumhydroxid. Die Kompositpartikel wurden unter dem Rasterelektronenmikroskop untersucht (Figuren 1, 2). Sie sind im wesentlichen aus großen Aluminiumhydroxid-Kristallen bzw. -Kristallagglomeraten aufgebaut, auf deren Oberfläche Titandioxidpartikel fixiert sind.

Anschließend wurden die Kompositpigmentpartikel in eine Innendispersionsfarbe (Testfarbe) mit der in Tabelle 1 angegebenen Rezeptur eingearbeitet, wobei das $TiO_2$-Pigment KRONOS 2310 teilweise durch die Kompositpigmentpartikel gemäß Beispiel 1 ersetzt wurde, so dass der Netto-$TiO_2$-Pigmentgehalt um 10 Gew.-% (Beisp. 1-1), bzw. um 20 Gew.-% (Beisp. 1-2), bzw. um 30 Gew.-% (Beisp. 1-3) jeweils bezogen auf $TiO_2$-Pigment erniedrigt wurde. Die Pigmentvolumenkonzentration (PVK) der Testfarbe betrug 78 %.

Als Vergleichsbeispiel 1 wurde die Testfarbe nur mit dem kommerziellen $TiO_2$-Pigment KRONOS 2076 (Universalpigment mit niedriger Nachbehandlung) und als Vergleichsbeispiel 2 wurde die Testfarbe nur mit dem kommerziellen $TiO_2$-Pigment KRONOS 2310 (High-end - Pigment optimiert für Lackanwendungen), jeweils ohne Kompositpigmentpartikel, hergestellt.

Tabelle 1: Rezeptur der weißen Innendispersionsfarbe (Testfarbe)

| | |
|---|---|
| Wasser | 17,75 Gew.-% |
| Calgon N neu (Dispergiermittel) | 0,05 Gew.-% |
| Dispex N 40 (Dispergiermittel) | 0,30 Gew.-% |
| Agitan 315 (Entschäumer) | 0,20 Gew.-% |
| Acticid MBS (Algizid/Fungizid) | 0,40 Gew.-% |
| $TiO_2$-Pigment (KRONOS 2310) | 22,00 Gew.-% |
| Steamat (Füllstoff) | 7,00 Gew.-% |
| Socal $P_2$ (Füllstoff) | 2,00 Gew.-% |
| Omyacarb 2-GU (Füllstoff) | 11,80 Gew.-% |
| Omyacarb 5-GU (Füllstoff) | 15,50 Gew.-% |
| Celite 281 SS(Füllstoff) | 2,00 Gew.-% |
| Tylosepaste (3%ig) | 10,00 Gew.-% |
| Mowilith LDM 1871 (Bindemittel) | 11,00 Gew.-% |

Die Testfarbe wurde hinsichtlich Kontrastverhältnis (KV) und Aufhellvermögen (TS) getestet. Die Messergebnisse sind in Tabelle 2 zusammengefasst.

Tabelle 2: Weiße Innendispersionsfarbe

| | Kontrastverhältnis (Mittelwert 80-125$\mu$m) | Aufhellvermögen (TS) (standard isiert) | Netto $TiO_2$-Pigmentgehalt [Gew.-%] |
|---|---|---|---|
| Beispiel 1-1 | 96,9 | 103 | 19,8 |
| Beispiel 1-2 | 96,8 | 101 | 18,7 |
| Beispiel 1-3 | 96,7 | 98 | 17,6 |
| Vergleichsbeispiel 1 | 95,5 | 94 | 22,0 |
| Vergleichsbeispiel 2 | 96,7 | 100 | 22,0 |

Testmethoden

Zur Bestimmung des Kontrastverhältnisses wurde die nach Rezepturvorschrift hergestellte weiße Innendispersionsfarbe (Testfarbe) mit Spaltrakeln (80 - 125 $\mu$m) mittels automatischem Filmaufziehgerät mit einer Geschwindigkeit von 12,5 mm/s auf Morest-Kontrastkarten aufgezogen. Anschließend wurden die Farbwerte Y über schwarzem Untergrund ($Y_{(schwarz)}$) und Y über weißem Untergrund ($Y_{(weiß)}$) je dreimal mit dem Spektralphotometer Colorview gemessen. Das Kontrastverhältnis wurde nach folgender Formel errechnet:

$$KV\ [\%] = Y_{(schwarz)}\ /\ Y_{(weiß)}\ \text{x}\ 100$$

Zur Bestimmung des Aufhellvermögens (TS) wurde 50 g der nach Rezepturvorschrift hergestellten Testfarbe mit 0,5 g Schwarzpaste Colanyl Schwarz PR 130 vermischt und mittels Rakel (Spalthöhe 100 $\mu$m) auf Morestkarten aufgetragen. Die Remissionswerte der Schicht wurden mit einem Byk-Gardner Color View gemessen. Die daraus abgeleiteten TS-Werte sind auf das Vergleichsbeispiel 2 als Standard bezogen

Fazit

Die Verwendung erfindungsgemäßer Kompositpigmentpartikel aus Aluminiumhydroxid und Titandioxid-Pigment beispielsweise in Farben ermöglicht je nach gewählter Kombination Pigmenteinsparungen ohne oder mit nur geringen Verlusten der optischen Eigenschaften. Alternativ können bei gleichem Pigmentgehalt auch bessere Werte insbesondere im Aufhellvermögen erzielt werden.

**Patentansprüche**

1.  Verfahren zur Herstellung von Aluminiumhydroxid-haltigen Kompositpigmentpartikeln, die einen Aluminiumhydroxidanteil von mindestens 20 Gew.-% bevorzugt mindestens 40 Gew.-% aufweisen,
    wobei
    eine wässrige alkalische Lösung von Natriumaluminat mit einem pH-Wert von mindestens 12 bereitgestellt wird, anschließend anorganische Pigmentpartikel zugegeben werden und der pH-Wert der Lösung in den Bereich <8 und >3 abgesenkt wird, so dass partikuläres Aluminiumhydroxid gefällt wird und sich Aluminiumhydroxid-haltige Kompositpigmentpartikel bilden, und die Kompositpartikel abschließend abgetrennt werden.

2.  Verfahren nach Anspruch 1 **dadurch gekennzeichnet, dass**
    die anorganischen Pigmentpartikel Titandioxidpartikel sind.

3.  Verfahren nach Anspruch 1 oder 2 **dadurch gekennzeichnet, dass**
    die wässrige Natriumaluminatlösung zumindest teilweise ein industrieller Reststoff ist.

4.  Verfahren nach einem oder mehreren der Ansprüche 1 bis 3 **dadurch gekennzeichnet, dass**
    mindestens ein weiterer anorganischer und/oder organischer Feststoff zugegeben wird.

5.  Verfahren nach einem oder mehreren der Ansprüche 1 bis 4 **dadurch gekennzeichnet, dass**
    die Kompositpigmentpartikel abschließend mit Phosphorsäure, Natriumsilikat und/oder einem Aluminiumsalz behandelt werden.

6.  Verfahren nach einem oder mehreren der Ansprüche 1 bis 5 **dadurch gekennzeichnet, dass**
    sich nach der pH-Wert-Absenkung eine Reifezeit von mindestens 1 Stunde bevorzugt mindestens 2 Stunden anschließt.

7.  Kompositpigmentpartikel erhältlich durch das Verfahren nach einem oder mehreren der Ansprüche 1 bis 6.

8.  Verwendung der Kompositpigmentpartikel nach Anspruch 7 in Beschichtungen, Kunststoffen, Papier und Laminat.


**Claims**

1.  Method for manufacturing composite pigment particles containing aluminum hydroxide that display an aluminum hydroxide content of at least 20% by weight, preferably at least 40% by weight, wherein
    an aqueous, alkaline solution of sodium aluminate with a pH value of at least 12 is provided,
    inorganic pigment particles are subsequently added, and
    the pH value of the solution is lowered to within the range < 8 to > 3, such that particulate aluminum hydroxide is precipitated and composite pigment particles containing aluminum hydroxide are formed, and
    the composite particles are finally separated off.

2.  Method according to claim 1, **characterized in that**
    the inorganic pigment particles are titanium dioxide particles.

3.  Method according to claim 1 or 2, **characterized in that**
    the aqueous sodium aluminate solution is at least partly an industrial residue.

4.  Method according to one or more of claims 1 to 3, **characterized in that**
    at least one further inorganic and/or organic solid is added.

5.  Method according to one or more of claims 1 to 4, **characterized in that**
    the composite pigment particles are finally treated with phosphoric acid, sodium silicate and/or an aluminum salt.

6.  Method according to one or more of claims 1 to 5, **characterized in that**
    lowering of the pH value is followed by an ageing period of at least 1 hour, preferably at least 2 hours.

7.  Composite pigment particles obtainable by a method according to one or more of claims 1 to 6.

**8.** Use of the composite pigment particles according to claim 7 in coatings, plastics, paper and laminates.

**Revendications**

**1.** Procédé de fabrication de particules de pigment composite contenant de l'hydroxyde d'aluminium, qui présentent une fraction d'hydroxyde d'aluminium d'au moins 20 % en poids, de manière préférée d'au moins 40 % en poids, dans lequel
une solution alcaline aqueuse d'aluminate de sodium est fournie avec une valeur pH d'au moins 12, puis des particules de pigment inorganiques sont ajoutées et la valeur pH de la solution est diminuée dans la plage < 8 et > 3 de sorte que de l'hydroxyde d'aluminium particulaire est précipité et que des particules de pigment composites contenant de l'hydroxyde d'aluminium se forment, et les particules composites sont ensuite séparées.

**2.** Procédé selon la revendication 1, **caractérisé en ce que** les particules de pigment inorganiques sont des particules de dioxyde de titane.

**3.** Procédé selon la revendication 1 ou 2, **caractérisé en ce que** la solution d'aluminate de sodium aqueuse est au moins en partie une substance résiduelle industrielle.

**4.** Procédé selon l'une quelconque ou plusieurs des revendications 1 à 3, **caractérisé en ce qu'**au moins une autre matière solide inorganique et/ou organique est ajoutée.

**5.** Procédé selon l'une quelconque ou plusieurs des revendications 1 à 4, **caractérisé en ce que** les particules de pigment composites sont traitées ensuite avec de l'acide phosphorique, du silicate de sodium et/ou un sel d'aluminium.

**6.** Procédé selon l'une quelconque ou plusieurs des revendications 1 à 5, **caractérisé en ce qu'**après la diminution de la valeur pH, un temps de maturation d'au moins 1 heure, de manière préférée d'au moins 2 heures, suit.

**7.** Particules de pigment composites pouvant être obtenues par le procédé selon l'une quelconque ou plusieurs des revendications 1 à 6.

**8.** Utilisation des particules de pigment composites selon la revendication 7 dans des revêtements, des matières plastiques, du papier et du stratifié.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 1999035193 A1
- DE 10057294 C5
- EP 0861299 B1
- DE 102006012564 A1
- EP 0956316 B1
- DE 1792118 A1
- WO 2000001771 A1

- WO 2014000874 A1
- EP 13005813 A
- US 20140079745 A1
- WO 2014078039 A1
- DE 102007040641 A1
- EP 1329485 A1